(19) Europäisches Patentamt
European Patent Office
Office européen des brevets

(11) **EP 4 455 211 A1**

(12) **EUROPEAN PATENT APPLICATION**
published in accordance with Art. 153(4) EPC

(43) Date of publication:
**30.10.2024 Bulletin 2024/44**

(21) Application number: 22910511.9

(22) Date of filing: **03.10.2022**

(51) International Patent Classification (IPC):
*C08L 67/04* [(2006.01)]       *C08K 5/11* [(2006.01)]
*C08K 5/12* [(2006.01)]       *C08L 29/04* [(2006.01)]
*C08L 101/16* [(2006.01)]

(52) Cooperative Patent Classification (CPC):
**C08K 5/11; C08K 5/12; C08L 29/04; C08L 67/04;
C08L 101/16; Y02W 90/10**

(86) International application number:
**PCT/JP2022/036893**

(87) International publication number:
**WO 2023/119785 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.12.2021 JP 2021210095**

(71) Applicant: **Miyoshi Oil & Fat Co., Ltd.
Tokyo 124-8510 (JP)**

(72) Inventors:
• **KOGURE Yuma
  Iwakura-shi, Aichi 482-8511 (JP)**
• **SUZUKI Sho
  Iwakura-shi, Aichi 482-8511 (JP)**

(74) Representative: **Angerhausen, Christoph
Boehmert & Boehmert
Anwaltspartnerschaft mbB
Pettenkoferstrasse 22
80336 München (DE)**

(54) **BIODEGRADABLE RESIN AQUEOUS DISPERSION HAVING EXCELLENT LONG-TERM STORAGE STABILITY AND METHOD FOR USING SAME**

(57)     Provided is a biodegradable resin aqueous dispersion that has a favorable dispersibility and is able to inhibit separation even when the dispersion is stored for a long period of time, as well as a method of using the same. The biodegradable resin aqueous dispersion of the present invention is an aqueous dispersion in which a biodegradable resin is dispersed in an aqueous solvent, and contains a polylactide resin as being the biodegradable resin, a polyvinyl alcohol that has an average molecular weight of 20,000 or more as based on viscosity-average degree of polymerization and has a degree of saponification of no more than 98%, and a polyvalent carboxylic acid ester, wherein a mass ratio of the polyvalent carboxylic acid ester to the polyvinyl alcohol is no more than 6.

EP 4 455 211 A1

**Description**

Technical Field

The present invention relates to a biodegradable resin aqueous dispersion.

Background Art

In the context of heightened environmental consciousness and the issue of marine plastic waste in recent years, there has been a surge in the demand for a material that could be an alternative to plastic.

Particularly, an aqueous dispersion of biodegradable resin has excellent biodegradability, workability and physical safety, and is actively being developed for application in various fields such as paper coatings, paints, and adhesives.

In order to use the aqueous dispersion of biodegradable resin for the aforementioned applications, it is imperative that the film exhibits properties such as water resistance, oil resistance, flexibility, and adhesiveness depending on its intended use. However, if the aqueous dispersion lacks long-term storage stability, it poses a risk that the dispersion unintentionally separates into water and resin layers over time, which therefore hinders the exhibition of the necessary properties when the dispersion is used.

The stability of a biodegradable resin aqueous dispersion depends on the ionic character and molecular weight of the dispersant used, the type and the content of a plasticizer if it is used, and the particle diameter of the resin particles in the dispersion. Unfortunately, no aqueous dispersion of biodegradable resin has ever been developed with a long-term storage stability which is sufficient enough for commercializing products; that is, a long-term storage stability that inhibits separation for about, for example, a half year of storage. Particularly desired has been a technique that imparts long-term storage stability while satisfying the requirements of, for example, water resistance, oil resistance, and flexibility of the film. Conventionally, there have been proposed techniques such as those of Patent documents 1 to 8 employing polylactide as a biodegradable resin for the aqueous dispersion.

Prior art documents

Patent document

Patent Document 1: JP-A-2004-107413

Patent Document 2: JP-A-2004-204038

Patent Document 3: JP-A-2001-064440

Patent Document 4: JP-A-2004-099883

Patent Document 5: JP-A-2005-089751

Patent Document 6: JP-A-2002-121288

Patent Document 7: JP-A-2001-247392

Patent Document 8: JP-A-2006-241400

Summary of Invention

Technical Problem

However, no study has ever been done on long-term storage stability which is capable of inhibiting separation for about a half year of storage. Patent documents 1 and 2 propose aqueous dispersions of polylactide containing plasticizers but the documents do not disclose the molecular weight or saponification degree of the employed polyvinyl alcohol, and the long-term storage stability is not evaluated either. Patent documents 3 and 4 do not specifically disclose an aqueous dispersion to which a plasticizer has been added, and their storage periods are verified to be approximately two months only, which is short in view of the realistic commercialization of the products. Patent documents 5 to 8 do not disclose any combination of the employed polyvinyl alcohol and plasticizer which is suitable for long-term storage stability; for example, the plasticizer is excessive with respect to the employed polyvinyl alcohol or the type of plasticizer is misfit. Further, in some cases, resin particles in the dispersion may have large particle sizes.

The present invention has been made in view of the above circumstances, and it is an object of the present invention to provide a biodegradable resin aqueous dispersion that has a favorable dispersibility and is able to inhibit separation even when the dispersion is stored for a long period of time, as well as a method of using the same.

Solution to Problem

The inventors of the present invention diligently conducted studies, and completed the invention as below. That is, regarding a biodegradable resin aqueous dispersion employing a polylactide resin, the inventors found that a dispersion modified to employ polyvinyl alcohol, having a specific molecular weight and saponification degree, and a specific plasticizer within a specific range of compounding ratio can solve the above problems.

Specifically, the biodegradable resin aqueous dispersion of the present invention is an aqueous dispersion with a biodegradable resin being dispersed in an aqueous solvent, containing, a polylactide resin as being the biodegradable resin, a polyvinyl alcohol that has an average molecular weight of 20,000 or more as based on viscosity-average degree of polymerization and has a degree of saponification of no more than 98%, and a polyvalent carboxylic acid ester, wherein a mass ratio of the polyvalent carboxylic acid ester to the polyvinyl alcohol is no more than 6.

The method for using the biodegradable resin aqueous dispersion according to the present invention present invention includes the steps of: preparing the biodegradable resin aqueous dispersion; storing the biodegradable resin aqueous dispersion for a period within 6 months; and then, after the storage, providing the biodegradable resin aqueous dispersion for use.

Advantageous Effects of Invention

The biodegradable resin aqueous dispersion and the method for using the same according to the present invention can achieve a biodegradable resin aqueous dispersion having a favorable dispersion property and inhibit separation even when the dispersion is stored for a long period of time. Further, the dispersion also satisfies resin properties such as water resistance, oil resistance, and flexibility, and does not make these resin properties deteriorate even when the dispersion is stored for a long period of time.

Description of Embodiments

Embodiments of the present invention will be described below in greater detail.

The biodegradable resin aqueous dispersion of the present invention is an aqueous dispersion with a biodegradable resin being dispersed in an aqueous solvent. This biodegradable-resin dispersion contains a polylactide resin, as the biodegradable resin, and a polyvinyl alcohol that has an average molecular weight of 20,000 or more as based on viscosity-average degree of polymerization and has a degree of saponification of no more than 98%, and a polyvalent carboxylic acid ester, wherein a mass ratio of the polyvalent carboxylic acid ester to the polyvinyl alcohol is no more than 6.

As a polylactide resin of the biodegradable-resin dispersion of the present invention, there may be used polylactide and a copolymer of lactic acid and other hydroxycarboxylic acid.

Examples of the other hydroxycarboxylic acid in the copolymer of lactic acid and other hydroxycarboxylic acid include, but are not particularly limited to: glycolic acid, 2-hydroxybutyric acid, 2-hydroxyvaleric acid, 2-hydroxycaproic acid, 2-hydroxyheptanoic acid, 2-hydroxyoctanoic acid, 2-hydroxy-2-methylpropionic acid, 2-hydroxy-2-methylbutyric acid, 2-hydroxy-2-ethylbutyric acid, 2-hydroxy-2-methylvaleric acid, 2-hydroxy-2-ethylvalerate, 2-hydroxy-2-propylvalerate, 2-hydroxy-2-butylvalerate, 2-hydroxy-2-methylcaproic acid, 2-hydroxy-2-ethylcaproic acid, 2-hydroxy-2-propylcaproic acid, 2-hydroxy-2-butylcaproic acid, 2-hydroxy-2-pentylcaproic acid, 2-hydroxy-2-methylheptanoic acid, 2-hydroxy-2-ethylheptanoic acid, 2-hydroxy-2-propylheptanoic acid, 2-hydroxy-2-butylheptanoic acid, 2-hydroxy-2-methyloctanoic acid, 3-hydroxypropionic acid, 4-hydroxybutyric acid, 5-hydroxyvaleric acid, 6-hydroxycaproic acid, and 7-hydroxyheptanoic acid. They may be used alone or in combination of two or more.

The molar ratio of the hydroxycarboxylic acid monomer to the lactic acid monomer in the copolymer of lactic acid and other hydroxycarboxylic acid may, for example, be, although not limited to the following, no more than 0.2, no more than 0.1, or no more than 0.05.

When polylactide is used as a polylactide resin, it is preferred that it have a D-lactic acid content of 1 to 30 mol%, more preferably of 5 to 20 mol%. The lactic acid and hydroxycarboxylic acid may be of any type such as D-, L- or -D/L isomer, which is not particularly limited.

The polylactide resin has a weight average molecular weight of preferably 5,000 to 1,000,000, more preferably 10,000 to 300,000. The weight-average molecular weight (Mw) of the polylactide resin may for example be obtained by a method as explained below in the section of working examples via gel permeation chromatography (GPC) where the molecular weight is compared with a known reference substance.

The biodegradable resin aqueous dispersion of the present invention may also contain, as a biodegradable resin, a further resin other than the polylactide resin. Such biodegradable resins are not particularly limited, and examples of which may include those of: diacid polyesters such as polybutylene succinate, polybutylene succinate adipate, polyethylene succinate, polyethylene terephthalate succinate, polybutylene adipate, polybutylene adipate terephthalate; and polycaprolactone; a copolymer of caprolactone and other hydroxycarboxylic acid; polyhydroxybutyrate; and a copolymer of polyhydroxybutyrate and other hydroxycarboxylic acid. Any one kind of them may be used alone, or two or more kinds of them may be used in combination.

It is preferred that the biodegradable resin aqueous dispersion of the present invention contain the polylactide resin by an amount of not smaller than 50% by mass per the total amount of the biodegradable resin(s), and the larger the content of the polylactide resin contained in the biodegradable resin is, the more preferable it is; the biodegradable resin aqueous dispersion may contain, in ascending order of preference, 60% by mass or more, 70% by mass or more, 80% by mass or more, 90% by mass or more, 95% by mass or more, or 98% by mass or more of the polylactide resin per the total amount of the biodegradable resin(s). Most preferably, the polylactide resin makes up all the biodegradable resin(s).

In the biodegradable resin aqueous dispersion of the present invention, the polyvinyl alcohol enables the resin particles of polylactide resin to be stably dispersed in the solvent.

Both an unmodified polyvinyl alcohol and a modified polyvinyl alcohol may be used as the polyvinyl alcohol of the biodegradable resin aqueous dispersion of the present invention.

Examples of such modified polyvinyl alcohol include, but are not particularly limited to, an ethylene-modified polyvinyl alcohol, a carbonyl-modified polyvinyl alcohol, an alkyl ether-modified polyvinyl alcohol, an acetoacetyl-modified polyvinyl alcohol, an acetamide-modified polyvinyl alcohol, a diacetone group-modified polyvinyl alcohol, an acrylonitrile-modified polyvinyl alcohol, a silicone-modified polyvinyl alcohol, and a silicon-modified polyvinyl alcohol. These may be used alone or in combination of two or more.

The polyvinyl alcohol has a weight-average molecular weight via viscosity-average degree of polymerization of not smaller than 20,000. The polyvinyl alcohol having the weight-average molecular weight of not smaller than 20,000 leads to resin particles of polylactide resin having fine particle diameters, which enable inhibition of separation even when the biodegradable resin aqueous dispersion is stored for a long period of time. For this reason, it can inhibit deterioration of resin properties such as water resistance, oil resistance, and flexibility of the film even when the dispersion is stored for a long period of time. It is preferred in terms of enhancing long-term storage stability that the polyvinyl alcohol have an average molecular weight of no less than 30,000, more preferably no less than 60,000, even more preferably no less than 70,000. The average molecular weight of polyvinyl alcohol has no particular upper limit. Nevertheless, in respect of the dispersibility of the polylactide resin particles, resin properties such as water resistance, oil resistance, and flexibility of the film and ability to inhibit deterioration of these resin properties when the dispersion is stored for a long period of time, it is preferred that the molecular weight be 250,000 or less, more preferably 220,000 or less, even more preferably 200,000 or less, particularly preferably 180,000 or less and more particularly preferably 140,000 or less.

For example, a polyvinyl alcohol having an average molecular weight of 60,000 or more, specifically of 70,000 or more, particularly enhances long-term storage stability of the biodegradable resin aqueous dispersion, dispersibility of the polylactide resin particles, and resin properties of the films or the like over time. A polyvinyl alcohol having an average molecular weight of 200,000 or less further enhances resin properties in respect of, particularly, film-forming property or other resin properties of the film, while a polyvinyl alcohol having an average molecular weight of 140,000 or less further enhances dispersibility of the polylactide resin particles, and resin properties of the films or the like over time.

The average molecular weight of polyvinyl alcohol can be calculated from the viscosity-average degree of polymerization, saponification degree, and the molecular weights of the vinyl acetate unit and vinyl alcohol unit.

The degree of polymerization of polyvinyl alcohol can be calculated from the limiting viscosity [η] (Unit: liter/g) as measured in water at 30°C using sodium hydroxide to re-saponify the polyvinyl alcohol in a manner as set forth in JIS K 6726 on the basis of the following formula.

$$\text{Viscosity-average degree of polymerization} = ([\eta] \times 10000/8.29)^{(1/0.62)}$$

This viscosity-average degree of polymerization is converted into molecular weights of the vinyl acetate unit and the vinyl alcohol unit depending on the rate of saponification degree to determine the average molecular weight. The degree of polymerization of a modified polyvinyl alcohol can also be calculated in a similar manner as shown above via viscosity-average degree of polymerization.

The saponification degree of polyvinyl alcohol is no more than 98%. A polyvinyl alcohol having a saponification degree of no more than 98% exhibits favorable dispersibility of the polylactide resin particles even when a polycarboxylic acid ester is employed as a plasticizer, which thereby inhibits the resin particles from being ununiform, aggregated and/or precipitated, and allows the particles to maintain a favorable dispersion condition. Further, such polyvinyl alcohol inhibits separation even when the biodegradable resin aqueous dispersion is stored for a long period of time. In this respect, the polyvinyl alcohol has a saponification degree of preferably no more than 96%, more preferably no more than 94%. It is also preferred that the polyvinyl alcohol have a saponification degree of no more than 90%, more preferably no more than 87% in respect of exhibiting favorable dispersibility of the polylactide resin particles and inhibiting separation even when it is stored for a long period of time, as well as being capable of inhibiting deterioration of resin properties such as water resistance, oil resistance and flexibility of the film or the like even when it is stored for a long period of time. Although no particular lower limitation will be imposed on the saponification degree of polyvinyl alcohol, in respect of enhancing long-term storage stability, dispersibility of the polylactide resin particles and resin properties such as water resistance, oil resistance and flexibility of the film or the like, as well as being capable of inhibiting deterioration of the above-mentioned resin properties even when it is stored for a long period of time, it is preferred that the polyvinyl alcohol have a saponification degree of no less than 70%, more preferably no less than 72%, even more preferably no less than 75%, and particularly preferably no less than 78%.

For example, a polyvinyl alcohol having a saponification degree of no more than 90% further improves long-term storage stability and resin properties of the films or the like over time, and the one of no more than 87% further improves dispersibility of the polylactide resin particles and resin properties of the films or the like over time. A polyvinyl alcohol having a saponification degree of no less than 75% further improves the dispersibility of the polylactide resin particles.

The saponification degree of polyvinyl alcohol can be calculated by a method as set forth in JIS K 6726 using sodium hydroxide to determine the quantity of the remaining acetic acid groups.

It is preferred that the biodegradable resin aqueous dispersion of the present invention have a polyvinyl alcohol having an average molecular weight of 30,000 to 200,000 and a saponification degree of 70% to 94% in respect of enhancing long-term storage stability, dispersibility of the polylactide resin particles and resin properties such as water resistance, oil resistance and flexibility of the film or the like as well as being capable of inhibiting deterioration of the above-mentioned resin properties even when it is stored for a long period of time. It is more preferred that the polyvinyl alcohol have an average molecular weight of 60,000 to 200,000, and a saponification degree of 78% to 94%. It is even more preferred that the polyvinyl alcohol have an average molecular weight of 70,000 to 200,000, and a saponification degree of 78% to 90%. It is particularly preferred that the polyvinyl alcohol have an average molecular weight of 70,000 to 140,000, and a saponification degree of 78% to 87%.

It is preferred that the biodegradable resin aqueous dispersion of the present invention be such that a mass ratio of the polyvinyl alcohol to the polylactide resin is 0.001 to 1.0, more preferably 0.01 to 0.5, even more preferably 0.05 to 0.4 and particularly preferably 0.1 to 0.3. The mass ratios within these ranges are suitable for dispersing polylactide resin particles and inhibiting the separation of the biodegradable resin aqueous dispersion when it is stored for a long period of time.

The polyvalent carboxylic acid ester may be used in the biodegradable resin aqueous dispersion of the present invention as a plasticizer for improving, for example, a film property. Examples of such plasticizer include not only a polyvalent carboxylic acid ester but also various examples such as a polyglyceryl fatty acid ester derivative and a polyhydroxy carboxylic acid; and a combination of the polyvalent carboxylic acid ester with a polyvinyl alcohol having the above-specified ranges of average molecular weight and saponification degree may be used to impart a favorable dispersion property to the polylactide resin particles, inhibit separation even when the biodegradable resin aqueous dispersion is stored for a long period of time, and make it satisfy resin properties such as water resistance, oil resistance, and flexibility of the films or the like, where these resin properties do not deteriorate even when the dispersion is stored for a long period of time.

Examples of the polyvalent carboxylic acid ester include, but are not particularly limited to, an aliphatic dibasic acid ester, an aliphatic tribasic acid ester, an aromatic dibasic acid ester and an aromatic tribasic acid ester. Examples of the aliphatic dibasic acid ester include sebacic acid esters such as dioctyl sebacate (DOS) and diethylhexyl sebacate (DEHS); adipic acid esters such as diisobutyl adipate (DIBA); dioctyl adipate (DOA); diethylhexyl adipate (DEHA); diisononyl adipate (DINA); diisodecyl adipate (DIDA); dibutoxyethoxyethyl adipate (DBEEA); and an ester of adipic acid and 2-(2-methoxyethoxy)ethanol and benzyl alcohol; azelaic acid esters such as dioctyl azelate (DOZ) and diethylhexyl azelate (DEHZ); a succinate ester; a maleic acid ester; a fumaric acid ester; and an itaconic acid ester.

Examples of the aliphatic tribasic acid ester include citrate esters such as acetyl triethyl citrate (ATEC), acetyl tributyl citrate (ATBC), triethyl citrate (TEC), tributyl citrate (TBC) and tri(ethyloxycarbonylmethylene) acetylcitrate ester.

Examples of the aromatic dibasic acid ester include phthalate esters such as dimethyl phthalate (DMP), diethyl phthalate (DEP), dibutyl phthalate (DBP), dioctyl phthalate (DOP), diphenyl phthalate (DPP), diethylhexyl phthalate (DEHP), ethyl phthalyl ethyl glycolate, ethyl phthalyl butyl glycolate, and butyl phthalyl butyl glycolate.

Examples of the aromatic tribasic acid ester include a triester of trimellitic acid and a saturated aliphatic alcohol having 8 to 13 carbon atoms, and examples of which include trioctyl trimellitate, triethylhexyl trimellitate, triisodecyl trimellitate and di-n-octyl-n-decyl trimellitate.

Of these, among the polyvalent carboxylic acid esters, in terms of resin properties of the films or the like, preferred is an aliphatic dibasic acid ester or an aliphatic tribasic acid ester, among which it is preferred that the aliphatic dibasic acid ester be an adipate ester, particularly di-isobutyl adipate. It is preferred that the aliphatic tribasic acid ester be a citrate ester, particularly acetyl tributyl citrate.

In the polylactide resin aqueous dispersion of the present invention, a mass ratio of the polyvalent carboxylic acid ester to the polyvinyl alcohol is no more than 6, preferably no more than 5, more preferably no more than 4, even more preferably no more than 3. The above-mentioned mass ratios within these ranges particularly inhibit the biodegradable resin aqueous dispersion from being separated even when the dispersion is stored for a long period of time, and do not cause any deterioration in the resin properties of the films or the like even when the dispersion is stored for a long period of time. Although no particular lower limitation will be imposed on the above-mentioned mass ratios, in respect of dispersing the polylactide resin particles and long-term storage stability of the biodegradable resin aqueous dispersion, it is preferred that the ratio be no less than 0.3, more preferably no less than 0.6.

It is preferred that the polylactide resin aqueous dispersion of the present invention be such that the mass ratio of the polyvalent carboxylic acid ester to the polylactide resin is 0.005 to 5.0, more preferably 0.01 to 1.0, even more preferably 0.05 to 0.5. The above-mentioned mass ratios within these ranges more effectively exhibit plasticizing performance and make it more suitable for inhibiting the breed out of the plasticizer from occurring.

In the case of the biodegradable resin aqueous dispersion of the present invention, although there are no particular limitations on the aqueous solvent, examples of which include water, and a mixed solvent of water and an organic solvent that is compatible with water. In the abovementioned mixed solvent, while there are no particular limitations on the content of water, it is preferred that the content of water be not smaller than 90% by mass, more preferably not smaller than 95% by mass, per the total amount of the mixed solvent.

In the abovementioned mixed solvent, although there are no particular limitations on the organic solvent; the organic solvent may, for example, be a monovalent alcohol and a multivalent alcohol. Examples of such monovalent alcohol include methanol, ethanol, butanol, isopropyl alcohol (IPA), normal propyl alcohol and butanol; examples of such multivalent alcohol include glycerin and butylene glycol. Any one kind of them may be used alone, or two or more kinds of them may be used in combination.

The biodegradable resin aqueous dispersion of the present invention may further contain other components other than those described above, on the premise that the effects of the present invention are not impaired. Examples of such other components include, but are not particularly limited to, an ionic dispersant such as an anionic surfactant and a cationic surfactant, a viscosity adjustor, a surface smoothing agent, a water repellent agent (hydrophobicity improving agent), a mold release agent, an antirust agent, a fluidity adjustor, and waxes. Any one kind of them may be used alone, or two or more kinds of them may be used in combination.

In the case of the biodegradable resin aqueous dispersion of the present invention, it is preferred that the solid content be not smaller than 30% by mass, more preferably not smaller than 35% by mass, per the total amount of the biodegradable resin aqueous dispersion. When the solid content is within these ranges, drying efficiency will improve as the resin particles shall occupy a large portion of the aqueous dispersion. Further, when the viscosity of the aqueous dispersion is in an appropriate range, the resin particles can be stably dispersed without the aid of a viscosity adjustor such as a thickener. Here, it is preferred that the solid content be no larger than 50% by mass, more preferably no larger than 45% by mass. When the solid content is within these ranges, the viscosity of the aqueous dispersion will not become too high whereby a favorable handling property will be exhibited at the time of applying the aqueous dispersion. The solid content as used herein refers to a percentage of a mass without the content of aqueous solvents such as water to the total amount of the biodegradable resin aqueous dispersion.

It is preferred that the biodegradable resin aqueous dispersion be such that the average particle diameter of the resin particles of the polylactide resin that are dispersed in the aqueous solvent is 3.5 $\mu$m or less. When the average particle diameter is within this range, the resin particles are stably dispersed and the resins themselves will be present in a denser manner during a drying step, and the particles themselves will thus be easily fusion-bonded to one another, whereby a transparent film can be obtained without performing a special heating treatment. In this regard, the average particle diameter is preferably not larger than 3.0 $\mu$m. Here, the average particle diameter of the resin particles as used herein refers to a value obtained via measurement by a method to be described later.

Although there are no particular limitations on a method for manufacturing the biodegradable resin aqueous dispersion of the present invention; the dispersion of the present invention may, for example, be produced by mixing and stirring a biodegradable resin(s), polyvinyl alcohol and a polyvalent carboxylic acid ester with an aqueous solvent.

Specifically, there may be employed, for example, a pressurizing dispersion method where a biodegradable resin(s), polyvinyl alcohol, a polyvalent carboxylic acid ester, and water are simultaneously put into a sealed tank equipped with a stirrer, followed by applying a pressure while performing heating and stirring so as to disperse the biodegradable resin(s); a direct dispersion method where a melted product containing a biodegradable resin(s), polyvinyl alcohol and a polyvalent carboxylic acid ester is added to a hot water kept under a pressure, and is stirred so as to be dispersed therein; a phase inversion method where a biodegradable resin(s) and a polyvalent carboxylic acid ester are heated and melted, followed by adding thereto, while performing stirring, a water solution containing polyvinyl alcohol, thereby allowing the biodegradable resin(s) to be dispersed in water; a method where an organic solvent, water, a biodegradable resin(s), polyvinyl alcohol and a polyvalent carboxylic acid ester are added, stirred and dispersed, followed by eliminating the organic solvent; and a method where an aqueous solution containing polyvinyl alcohol is added, while performing stirring, into an organic solvent solution of a biodegradable resin(s) and polyvalent carboxylic acid ester so as to disperse the resin(s) therein, followed by eliminating the organic solvent.

In terms of applicability to a wider range of biodegradable resin types, and in consideration of the progress of hydrolysis, preferred is a method where an organic solvent, water, the biodegradable resin(s), polyvinyl alcohol, and a polyvalent carboxylic acid ester are put into a sealed tank equipped with a stirrer, followed by raising the temperature while stirring them so as to dissolve and disperse the solid raw materials, and then performing cooling, whereafter the organic solvent is to be eliminated under a reduced pressure.

Alternatively, also preferred is a method where an organic solvent, the biodegradable resin(s) and a polyvalent carboxylic acid ester are put into a sealed tank equipped with a stirrer, followed by raising the temperature while stirring them so as to dissolve the resin(s) and thus obtain a biodegradable resin-dissolved solution; meanwhile, water and polyvinyl alcohol are put into another stirring tank to prepare a water solution with the ingredient dissolved therein, followed by adding this water solution to the aforementioned sealed tank to disperse the resin(s) while performing stirring and raising the temperature to a temperature not lower than a resin dissolution temperature, whereafter cooling is conduced, and the organic solvent is then eliminated under reduced pressure.

Although not particularly limited, examples of the organic solvent include ester-based organic solvents which are, for example, formic acid esters such as methyl formate, ethyl formate, propyl formate and butyl formate, and acetic acid esters such as methyl acetate, ethyl acetate, propyl acetate and butyl acetate; chlorine-based organic solvents such as chloroform and carbon tetrachloride; and aromatic hydrocarbons such as benzene, toluene and xylene. Of these examples, preferred are the ester-based organic solvents with a favorable resin solubility; particularly preferred are the formic acid esters and acetic acid esters. In view of a sufficient dissolution of the resin(s) and a sufficient dissolution of the polyvinyl alcohol and polyvalent carboxylic acid ester, a mass ratio between the organic solvent and water is preferably "organic solvent":"water" = 1:9 to 9:1, more preferably 7:3 to 3:7.

As a dispersion stirring device for manufacturing the biodegradable resin aqueous dispersion, a homomixer and a high-pressure emulsification machine may for example be used; however, without using such specialized device(s), there may for example be used a rotary stirring machine that is normally used to perform dispersion, mixing and stirring, and is equipped with a stirring blade such as a propeller blade, a paddle blade, a turbine blade, an anchor blade and/or a ribbon blade. Further, a stirring speed and a rotation speed may employ the settings that are normally employed to perform dispersion and mixing. For example, there may be used a stirring blade where a ratio between a blade diameter (d1) of the stirring blade and an inner diameter (d2) of a stirring tank at the time of dispersion (blade ratio: d1/d2) ranges from 0.5 to 0.85. Further, a peripheral speed of the stirring blade may be 1 to 8 m/s.

The biodegradable resin aqueous dispersion of the present invention can be provided in a simple, inexpensive and stable manner and is superior in the properties of film. The biodegradable resin aqueous dispersion can also be manufactured from the ingredients that meet the standards of the food sanitation act or are recorded in the approved list of the U.S. Food and Drug Administration (FDA). In view of the above, it can be suitably used in coating materials, paints, adhesive agents and the like. Specifically, the biodegradable resin aqueous dispersion may be used for a coating agent, a heat-sealing agent and an adhesive for a food packaging material (such as a food packaging paper of kraft paper, pure white rolled paper or fine paper, and a food packaging film of, for example, PE, PP, PET or biodegradable resin); a spacer for liquid crystal display apparatuses; an additive for toners; toners for developing electrophotographs; a rheology modifier or additive for coatings; a material for powder coatings; a mechanical property improving agent for molded articles such as automobile materials and architectural materials; a mechanical property improving agent for films, papers, fibers or the like; a raw material for resin-formed articles of rapid prototyping or rapid manufacturing; a material for flush molding; a paste resin for plastic sols; a powder blocking material; a fluidity or smoothness improving agent for powder bodies; a lubricant; a rubber compounding agent; a polisher; a thickening agent; a filtration agent; a filtration aid; a gelling agent; a flocculating agent; an oil absorbing agent; a mold release agent; a slipperiness improving agent for plastic films or sheets; a blocking inhibitor; a gloss controlling agent; a matting agent; a light diffusing agent; a surface hardness enhancing agent; a toughness enhancing agent; a filler for chromatography; an aid for microcapsules; medical materials for, for example, a drug delivery system and a diagnostic drug; a medical diagnostic agent; a preserving agent for flavor materials and agrochemicals; a catalyst and a support thereof for chemical reactions; a gas adsorbing agent; an ion exchanged resin; a sintering material for ceramic processing; standard particles for measurement or analysis; particles for the field of food industry; adhesives for papers such as kraft paper, Japanese paper, glassine paper, synthetic paper, processed paper (a paper that has undergone treatments such as aluminum evaporation, aluminum laminate, varnish, or resin application), thermal paper, parchment paper, and rayon paper; adhesives for cypress, cedar, birch, pine and other woods; and adhesives for fabric cloth such as textile, knitted fabric and nonwoven fabric using hydrophobic and/or hydrophilic fiber.

Examples of such textile, knitted fabric and nonwoven fabric using hydrophobic and/or hydrophilic fiber include sanitary articles such as diapers and masks; industrial materials such as sound absorbing materials, sound barrier adiabatic material, noise reduction cushioning materials, protective clothing, insecticide bags and packaging materials; and food product materials such as tea packs, drip sheets, and food packaging materials.

Further, through the use of the biodegradable resin aqueous dispersion as explained above, there is also provided a method of using the biodegradable resin aqueous dispersion, comprising the steps of: preparing the above-described biodegradable resin aqueous dispersion; storing the biodegradable resin aqueous dispersion for a period within six months; and providing the biodegradable resin aqueous dispersion for subsequent use after the storing step.

According to this method, the biodegradable resin aqueous dispersion exhibits favorable dispersibility and long-term storage stability, and inhibits precipitation or separation of the resin and water layers after storing the dispersion for 6 months at around room temperature. For this reason, even when the dispersion is stored for a long period of time, favorable resin properties, such as water resistance, oil resistance, and flexibility of the film, at the time of manufacturing the biodegradable resin aqueous dispersion are inhibited from being deteriorated at the point of use.

The method of using the biodegradable resin aqueous dispersion shall not be particularly limited so long as the method is used in an ordinary manner for the above-mentioned applications. For example, the biodegradable resin aqueous dispersion or a composition containing the dispersion may be applied to the surface of an object, and then dried to form a film on the surface of the object. The biodegradable resin aqueous dispersion of the present invention forms a uniform film after resin particles dispersed in water are fused with each other as the aqueous solvent evaporates. The manner of applying it to an object shall not particularly be limited, and examples of which include spreading and spraying depending on an intended use. A tool or device such as a coating device may be used. The drying condition shall not particularly be limited, and it may be natural drying in the air so long as the solvent component such as water is gradually released. The temperature for forming a film shall not particularly be limited, and the film may be easily formed at around room temperature, and the resin particles are fused without performing any particular heating treatment to thereby form a uniform film.

The present invention has thus far been described based on the embodiments thereof; however, the invention shall not be limited to these embodiments, and may be various modified without departing from the scope of the gist of the present invention.

Examples

The present invention is described in greater detail hereunder with reference to working examples, and the invention shall not be limited to the following working examples.

1. Preparation of biodegradable resin aqueous dispersion

In the working and comparative examples, the materials shown below were used as the biodegradable resin(s), polyvinyl alcohol and plasticizer.

(Biodegradable resin)

Polylactide: Weight-average molecular weight 200,000

The weight-average molecular weight (Mw) of the polylactide refers to an average molecular weight in terms of polystyrene that is measured by gel permeation chromatography, using the following devices and conditions.

[GPC measurement devices]

Column: by JASCO Corporation
Detector: RI detector for liquid chromatogram; RI-1530 by JASCO Corporation

[Measurement conditions]

Solvent: Chloroform (special grade)
Measurement temperature: 50°C
Flow rate: 1.0 ml/min
Sample concentration: 15 mg/ml
Injection volume: 2 μl
Standard curve: Universal Calibration
Analysis program: ChromNAV (Ver. 1.19.02)

(Dispersant: Polyvinyl alcohol)

The polyvinyl alcohols PVA-1 to PVA-9 shown in Table 1 were used as the dispersants for the polylactide. The average molecular weights of the polyvinyl alcohols were calculated as based on viscosity-average degree of polymerization as set forth in JIS K 6726, the saponification degree thereof and the molecular weights of the vinyl acetate unit and vinyl alcohol unit. The saponification degrees of the polyvinyl alcohols were values that were calculated by a method as set forth in JIS K 6726 using sodium hydrate for determining the quantity of the unsaponified acetic groups.

[Table 1]

|  | PVA-1 | PVA-2 | PVA-3 | PVA-4 | PVA-5 | PVA-6 | PVA-7 | PVA-8 | PVA-9 |
|---|---|---|---|---|---|---|---|---|---|
| Average molecular weight (in terms of 10 thousand) | 6 | 9 | 12 | 17 | 22 | 3 | 3 | 1.6 | 12 |
| Saponification degree (%) | 94 | 85 | 80 | 88 | 88 | 72 | 82 | 80 | 99 |

(Plasticizer)

As plasticizers, acetyl tributyl citrate, acetyl triethyl citrate, triethyl citrate, diisobutyl adipate, diglyceryl caprylate ester, diglyceryl stearate ester, decaglyceryl oleate ester as shown in Tables 2A and 2B and Tables 3A and 3B were used.
The respective components having the content ratios as shown in Tables 2A, 2B, 3A and 3B were put into a sealed dispersion tank, and then heated to 65°C, followed by dispersing the components by a dispersion method using a given stirring dispersion device before rapidly lowering the temperature to 40°C. The ethyl acetate was then eliminated therefrom under reduced pressure to obtain a biodegradable resin aqueous dispersion.

Average particle diameter and Standard deviation of particle size distribution

The average particle diameter and standard deviation of particle size distribution in the resin particles in the biodegradable resin aqueous dispersion were measured using a laser diffraction type particle size distribution measurement apparatus of Shimazu (type SALD-2300 manufactured by Shimadzu Corporation, refractive index: 1.45-0.00i).

2. Evaluation

The following evaluations were conducted on the biodegradable resin aqueous dispersions of the working and comparative examples.

[Long-term storage stability]

The respective biodegradable resin aqueous dispersions of the working and comparative examples were put into 100 ml glass containers and stored at 25°C for 6 months after which their appearances were observed for determining the levels of separation (%) of resin and water layers using the following criteria of:

◎: No separation was observed, or otherwise less than 10% of them were separated but no precipitation was observed;
∘: 10% or more of them were separated but no precipitation was observed;
△: 10% or more of them were separated, and there was observed precipitation which was re-dispersible if stirred; and
✕: 10% or more of them were separated, and there was observed precipitation which was unable to be re-dispersed even if it was stirred.

[Dispersibility]

The respective biodegradable resin aqueous dispersions of the working and comparative examples were visually observed to determine the dispersibility of the dispersions at the time of preparation using the following criteria of:

◎⁺: Oil-in-water (O/W) emulsion was quickly formed;
◎: Oil-in-water (O/W) emulsion was formed within 30 minutes;
∘: Oil-in-water (O/W) emulsion was formed within three hours; and
×: Oil-in-water (O/W) emulsion was unable to be formed.

[Film-forming property]

The biodegradable aqueous dispersion prepared in each of the working and comparative examples was applied, using a bar coater No. 20, to a craft paper (basis weight of 70 $g/m^2$) that was cut into a strip of 130 mm × 130 mm, and then dried at 25°C and 40% relative humidity for 24 hours, after which the coated papers were visually observed to evaluate the degree of white turbidity in outer appearance of the coated paper using the following criteria of:

◎: Transparent;
∘: Semitransparent;
△: Overall whitish; and
×: Pure white.

[Flexibility]

The biodegradable resin aqueous dispersion prepared in each of the working and comparative examples was put into a petri dish of Teflon® of 84 mm diameter to have a film thickness of 0.3 mm, and then dried at 25°C and 40% relative humidity for 24 hours, after which the resultant films were subjected to sensory evaluation using the following criteria of:

◎: Flexible as a whole;

∘: less than 10% of the area was cracked;

△: 10 to less than 50% of the area was cracked; and

×: 50% or more of the area was cracked.

[Water resistance]

The biodegradable resin aqueous dispersion prepared in each of the working and comparative examples was applied, using a bar coater No. 20, to a craft paper (basis weight of 70 $g/m^2$) that was cut into a strip of 130 mm × 130 mm, and then dried at 25°C and 40% relative humidity for 24 hours followed by pressing them for three minutes at 180°C under a condition of 300 $g/cm^2$ using a fully automatic transfer press HP-84 manufactured by HASHIMA CO., LTD to obtain test strips. Evaluation of the water resistance was based on JIS-P-8140 and determined by the amount of water absorption ($g/m^2$) whose evaluation criteria are:

◎: Water absorption was less than 5 $g/m^2$;
∘: Water absorption was 5 to less than 10 $g/m^2$;
△: Water absorption was 10 to less than 30 $g/m^2$; and
×: Water absorption was 30 $g/m^2$ or more.

[Oil resistance]

The biodegradable resin aqueous dispersion prepared in each of the working and comparative examples was applied, using a bar coater No. 20, to a craft paper (basis weight of 70 $g/m^2$) that was cut into a strip of 130 mm × 130 mm, and then dried at 25°C and 40% relative humidity for 24 hours to obtain test strips. Evaluation of the oil resistance was based on the KIT method of JAPAN TAPPI paper pulp testing method No. 41 using the following criteria for the coated papers of:

◎: KIT number was 10 or more;

∘: KIT number was 4 to less than 10;

△: KIT number was 1 to less than 4; and

×: KIT number was less than 1.

The results of the above evaluations are as shown in Tables 2A and 2B and Tables 3A and 3B. In the comparative examples 2 and 5, the polylactides were not dispersed, and as a result of which no aqueous dispersion was obtained. For this reason, the items on which the evaluations were unsuccessful were indicated as "-" in the tables.

In the evaluations in Table 2A, Table 2B, Table 3A and Table 3B, O, ◎ and ◎⁺ indicate good in solving the problem of the invention and better in this sequence in ascending order. Those indicated as ○, ◎ and ◎⁺ in Tables 2A and 2B solve the problems of long-term storage stability and dispersibility, while those indicated as △ in Tables 3A and 3B satisfy the minimum standards for solving the problem in terms of film-forming property, flexibility, water resistance and oil resistance. Of all of these evaluations, those having at least one "×" were regarded as those that would be unable to solve the problems of the invention.

[Table 2A]

| | | Working examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Polylactide | | 100 | 100 | 100 | 100 | 100 | 100 | 100 | 100 | 100 | 100 | 100 | 100 | 100 | 100 | 100 |
| Polyvinyl alcohol | PVA-1 | 15 | | | | | | | | | | | | | | |
| | PVA-2 | | 15 | | | | | | 15 | 15 | 15 | 5 | 15 | 15 | | |
| | PVA-3 | | | 15 | | | | | | | | | | | 15 | 15 |
| | PVA-4 | | | | 15 | | | | | | | | | | | |
| | PVA-5 | | | | | 15 | | | | | | | | | | |
| | PVA-6 | | | | | | 15 | | | | | | | | | |
| | PVA-7 | | | | | | | 15 | | | | | | | | |
| | PVA-8 | | | | | | | | | | | | | | | |
| | PVA-9 | | | | | | | | | | | | | | | |
| Plasticizer | Acetyl tributyl citrate | 30 | 30 | 30 | 30 | 30 | 30 | 30 | | | | 25 | 10 | 5 | | |
| | Acetyl triethyl citrate | | | | | | | | 30 | | | | | | 30 | |
| | Triethyl citrate | | | | | | | | | 30 | | | | | | 30 |
| | Diisobutyl adipate | | | | | | | | | | 30 | | | | | |
| | Diglyceryl caprylate ester | | | | | | | | | | | | | | | |
| | Diglyceryl stearate ester | | | | | | | | | | | | | | | |
| | Decaglyceryl oleate ester | | | | | | | | | | | | | | | |
| Solvent | Ethyl acetate | 230 | 230 | 230 | 230 | 230 | 230 | 230 | 230 | 230 | 230 | 230 | 230 | 230 | 230 | 230 |
| | Water | 200 | 200 | 200 | 200 | 200 | 200 | 200 | 200 | 200 | 200 | 200 | 200 | 200 | 200 | 200 |
| Plasticizer/PVA | | 2 | 2 | 2 | 2 | 2 | 2 | 2 | 2 | 2 | 2 | 5 | 0.67 | 0.33 | 2 | 2 |
| Plasticizer/polylactide | | 0.3 | 0.3 | 0.3 | 0.3 | 0.3 | 0.3 | 0.3 | 0.3 | 0.3 | 0.3 | 0.25 | 0.1 | 0.05 | 0.3 | 0.3 |
| PVA/polylactide | | 0.15 | 0.15 | 0.15 | 0.15 | 0.15 | 0.15 | 0.15 | 0.15 | 0.15 | 0.15 | 0.05 | 0.15 | 0.15 | 0.15 | 0.15 |

| Evaluation, | | Working examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| | Long-term storage stability | ○ | ◎ | ◎ | ◎ | ◎ | ○ | ○ | ◎ | ◎ | ◎ | ○ | ◎ | ◎ | ◎ | ◎ |
| | Dispersibility | ◎ | ◎+ | ◎+ | ◎ | ○ | ○ | ◎ | ◎+ | ◎+ | ◎+ | ◎ | ◎+ | ◎+ | ◎+ | ◎+ |
| | Average particle diameter | 2.5 | 1.2 | 1.1 | 2.0 | 3.8 | 1.8 | 1.3 | 1.1 | 1.1 | 1.2 | 2.8 | 1.1 | 1.0 | 1.2 | 1.1 |
| | Standard deviation | 0.30 | 0.10 | 0.10 | 0.20 | 0.36 | 0.32 | 0.17 | 0.12 | 0.13 | 0.12 | 0.53 | 0.11 | 0.30 | 0.12 | 0.11 |

[Table 2B]

| | | Working examples | | | | | | | | | | Comparative examples | | | | | |
|---|---|---|---|---|---|---|---|---|---|---|---|---|---|---|---|---|---|
| | | 16 | 17 | 18 | 19 | 20 | 21 | 22 | 23 | 24 | 25 | 1 | 2 | 3 | 4 | 5 | 6 |
| Polylactide | | 100 | 100 | 100 | 100 | 100 | 100 | 100 | 100 | 100 | 100 | 100 | 100 | 100 | 100 | 100 | 100 |
| Polyvinyl alcohol | PVA-1 | | | | | | | | | | | | | | | | |
| | PVA-2 | | | | | | | | | | | | | | | | |
| | PVA-3 | 15 | 5 | 15 | 15 | | | | | | | | | 15 | 15 | 15 | 5 |
| | PVA-4 | | | | | 15 | 15 | 15 | 5 | 15 | 15 | | | | | | |
| | PVA-5 | | | | | | | | | | | | | | | | |
| | PVA-6 | | | | | | | | | | | | | | | | |
| | PVA-7 | | | | | | | | | | | | | | | | |
| | PVA-8 | | | | | | | | | | | 15 | | | | | |
| | PVA-9 | | | | | | | | | | | | 15 | | | | |
| Plasticizer | Acetyl tributyl citrate | | 25 | 10 | 5 | | | | 25 | 10 | 5 | 30 | 30 | | | | 35 |
| | Acetyl triethyl citrate | | | | | 30 | | | | | | | | | | | |
| | Triethyl citrate | | | | | | 30 | | | | | | | | | | |
| | Diisobutyl adipate | 30 | | | | | | 30 | | | | | | | | | |
| | Diglyceryl caprylate ester | | | | | | | | | | | | | 30 | | | |
| | Diglyceryl stearate ester | | | | | | | | | | | | | | 30 | | |
| | Decaglyceryl oleate ester | | | | | | | | | | | | | | | 30 | |
| Solvent | Ethyl acetate | 230 | 230 | 230 | 230 | 230 | 230 | 230 | 230 | 230 | 230 | 230 | 230 | 230 | 230 | 230 | 230 |
| | Water | 200 | 200 | 200 | 200 | 200 | 200 | 200 | 200 | 200 | 200 | 200 | 200 | 200 | 200 | 200 | 200 |
| Plasticizer/PVA | | 2 | 5 | 0.67 | 0.33 | 2 | 2 | 2 | 5 | 0.67 | 0.33 | 2 | 2 | 2 | 2 | 2 | 7 |
| Plasticizer/Polylactide | | 0.3 | 0.25 | 0.1 | 0.05 | 0.3 | 0.3 | 0.3 | 0.25 | 0.1 | 0.05 | 0.3 | 0.3 | 0.3 | 0.3 | 0.3 | 0.35 |
| PVA/Polylactide | | 0.15 | 0.05 | 0.15 | 0.15 | 0.15 | 0.15 | 0.15 | 0.05 | 0.15 | 0.15 | 0.15 | 0.15 | 0.15 | 0.15 | 0.15 | 0.05 |

EP 4 455 211 A1

(continued)

| | | Working examples | | | | | | | | | | Comparative examples | | | | | |
|---|---|---|---|---|---|---|---|---|---|---|---|---|---|---|---|---|---|
| | | 16 | 17 | 18 | 19 | 20 | 21 | 22 | 23 | 24 | 25 | 1 | 2 | 3 | 4 | 5 | 6 |
| Evaluation | Long-term storage stability | ◎ | ○ | ◎ | ◎ | ◎ | ◎ | ◎ | ○ | ◎ | ◎ | × | - | × | × | - | × |
| | Dispersibility | ◎+ | ◎ | ◎+ | ◎+ | ◎ | ◎ | ◎ | ◎ | ◎+ | ◎+ | ◎ | × | ○ | ○ | × | × |
| | Average particle diameter | 1.1 | 2.8 | 1.0 | 1.0 | 2.1 | 2.2 | 2.1 | 3.6 | 1.9 | 1.8 | 4.5 | - | 3.8 | 4.2 | - | 8.0 |
| | Standard deviation | 0.12 | 0.50 | 0.10 | 0.30 | 0.20 | 0.25 | 0.28 | 0.61 | 0.20 | 0.19 | 0.35 | - | 0.58 | 0.55 | - | 0.60 |

[Table 3A]

| | | Working examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 14 | 15 |
| Polylactide | | 100 | 100 | 100 | 100 | 100 | 100 | 100 | 100 | 100 | 100 | 100 | 100 | 100 | 100 |
| Polyvinyl alcohol | PVA-1 | 15 | | | | | | | | | | | | | |
| | PVA-2 | | 15 | | | | | | 15 | 15 | 15 | 5 | 15 | | |
| | PVA-3 | | | 15 | | | | | | | | | | 15 | 15 |
| | PVA-4 | | | | 15 | | | | | | | | | | |
| | PVA-5 | | | | | 15 | | | | | | | | | |
| | PVA-6 | | | | | | 15 | | | | | | | | |
| | PVA-7 | | | | | | | 15 | | | | | | | |
| | PVA-8 | | | | | | | | | | | | | | |
| | PVA-9 | | | | | | | | | | | | | | |
| Plasticizer | Acetyl tributyl citrate | 30 | 30 | 30 | 30 | 30 | 30 | 30 | | | | 25 | 10 | | |
| | Acetyl triethyl citrate | | | | | | | | 30 | | | | | 30 | |
| | Triethyl citrate | | | | | | | | | 30 | | | | | 30 |
| | Diisobutyl adipate | | | | | | | | | | 30 | | | | |
| | Diglyceryl caprylate ester | | | | | | | | | | | | | | |
| | Diglyceryl stearate ester | | | | | | | | | | | | | | |
| | Decaglyceryl oleate ester | | | | | | | | | | | | | | |
| Solvent | Ethyl acetate | 230 | 230 | 230 | 230 | 230 | 230 | 230 | 230 | 230 | 230 | 230 | 230 | 230 | 230 |
| | Water | 200 | 200 | 200 | 200 | 200 | 200 | 200 | 200 | 200 | 200 | 200 | 200 | 200 | 200 |
| Plasticizer/PVA | | 2 | 2 | 2 | 2 | 2 | 2 | 2 | 2 | 2 | 2 | 5 | 0.667 | 2 | 2 |
| Plasticizer/Polyactide | | 0.3 | 0.3 | 0.3 | 0.3 | 0.3 | 0.3 | 0.3 | 0.3 | 0.3 | 0.3 | 0.25 | 0.1 | 0.3 | 0.3 |
| PVA/Polylactide | | 0.15 | 0.15 | 0.15 | 0.15 | 0.15 | 0.15 | 0.15 | 0.15 | 0.15 | 0.15 | 0.05 | 0.15 | 0.15 | 0.15 |

(continued)

| Evaluation | | | Working examples | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 14 | 15 |
| | Film-forming property | | ◎ | ◎ | ◎ | ◎ | Δ | ◎ | ◎ | ○ | ○ | ◎ | ○ | ○ | ○ | ○ |
| | Flexibility | Immediately after manufacturing | ◎ | ◎ | ◎ | ◎ | ○ | ◎ | ◎ | ◎ | ◎ | ◎ | ◎ | ○ | ◎ | ◎ |
| | | After 6 months | ○ | ◎ | ◎ | ◎ | Δ | Δ | Δ | ◎ | ◎ | ◎ | ○ | ○ | ◎ | ◎ |
| | Water resistance | Immediately after manufacturing | ○ | ○ | ○ | ○ | ○ | ○ | ○ | Δ | Δ | ○ | ◎ | ○ | Δ | Δ |
| | | After 6 months | ○ | ○ | ○ | ○ | Δ | Δ | Δ | Δ | Δ | ○ | ◎ | ○ | Δ | Δ |
| | Oil resistance | Immediately after manufacturing | ◎ | ◎ | ◎ | ◎ | ○ | ◎ | ◎ | ◎ | ◎ | ◎ | ○ | ○ | ◎ | ◎ |
| | | After 6 months | ○ | ◎ | ◎ | ○ | Δ | Δ | Δ | ◎ | ◎ | ◎ | ○ | ○ | ◎ | ◎ |

[Table 3B]

| | | Working | | | | | | | | | | | | | |
|---|---|---|---|---|---|---|---|---|---|---|---|---|---|---|---|
| | | 16 | 17 | 18 | 20 | 21 | 22 | 23 | 24 | 1 | 2 | | 4 | 5 | 6 |
| Polylactide | | 100 | 100 | 100 | 100 | 100 | 100 | 100 | 100 | 100 | 100 | 100 | 100 | 100 | 100 |
| Polyvinyl alcohol | PVA-1 | | | | | | | | | | | | | | |
| | PVA-2 | | | | | | | | | | | | | | |
| | PVA-3 | 15 | 5 | 15 | | | | | | | | 15 | 15 | 15 | 5 |
| | PVA-4 | | | | 15 | 15 | 15 | 5 | 15 | | | | | | |
| | PVA-5 | | | | | | | | | | | | | | |
| | PVA-6 | | | | | | | | | | | | | | |
| | PVA-7 | | | | | | | | | | | | | | |
| | PVA-8 | | | | | | | | | 15 | | | | | |
| | PVA-9 | | | | | | | | | | 15 | | | | |
| Plasticizer | Acetyl tributyl citrate | | 25 | 10 | | | | 25 | 10 | 30 | 30 | | | | 35 |
| | Acetyl triethyl citrate | | | | 30 | | | | | | | | | | |
| | Triethyl citrate | | | | | 30 | | | | | | | | | |
| | Diisobutyl adipate | 30 | | | | | 30 | | | | | | | | |
| | Diglyceryl caprylate ester | | | | | | | | | | | 30 | | | |
| | Diglyceryl stearate ester | | | | | | | | | | | | 30 | | |
| | Decaglyceryl oleate ester | | | | | | | | | | | | | 30 | |
| Solvent | Ethyl acetate | 230 | 230 | 230 | 230 | 230 | 230 | 230 | 230 | 230 | 230 | 230 | 230 | 230 | 230 |
| | Water | 200 | 200 | 200 | 200 | 200 | 200 | 200 | 200 | 200 | 200 | 200 | 200 | 200 | 200 |
| Plasticizer/PVA | | 2 | 5 | 0.667 | 2 | 2 | 2 | 5 | 0.667 | 2 | 2 | 2 | 2 | 2 | 7 |
| Plasticizer/Polylactide | | 0.3 | 0.25 | 0.1 | 0.3 | 0.3 | 0.3 | 0.25 | 0.1 | 0.3 | 0.3 | 0.3 | 0.3 | 0.3 | 0.35 |
| PVA/Polylactide | | 0.15 | 0.05 | 0.15 | 0.15 | 0.15 | 0.15 | 0.05 | 0.15 | 0.15 | 0.15 | 0.15 | 0.15 | 0.15 | 0.05 |

18

(continued)

| | | | Working | | | | | | | | | | | | |
|---|---|---|---|---|---|---|---|---|---|---|---|---|---|---|---|
| | | | 16 | 17 | 18 | 20 | 21 | 22 | 23 | 24 | 1 | 2 | | 4 | 5 | 6 |
| Evaluation | Film-forming property | | ◎ | ○ | ○ | ○ | ○ | ◎ | ○ | ○ | ○ | - | × | × | - | △ |
| | Flexibility | Immediately after manufacturing | ◎ | ◎ | ○ | ◎ | ◎ | ◎ | ◎ | ○ | ○ | - | △ | △ | - | △ |
| | | After 6 months | ◎ | ○ | ○ | ◎ | ◎ | ◎ | ○ | ○ | △ | - | × | × | - | × |
| | Water resistance | Immediately after manufacturing | ○ | ◎ | ○ | △ | △ | ○ | ◎ | ○ | ○ | - | × | × | - | △ |
| | | After 6 months | ○ | ◎ | ○ | △ | △ | ○ | ◎ | ○ | × | - | × | × | - | × |
| | Oil resistance | Immediately after manufacturing | ◎ | ○ | ○ | ◎ | ◎ | ◎ | ○ | ○ | ○ | - | △ | △ | - | △ |
| | | After 6 months | ◎ | ○ | ○ | ○ | ○ | ○ | △ | ○ | × | - | × | × | - | × |

The working examples 1 to 25 are polylactide resin aqueous dispersions each containing a polylactide resin, a polyvinyl alcohol that has an average molecular weight of 20,000 or more and has a degree of saponification of no more than 98%, and a polyvalent carboxylic acid ester, wherein the mass ratio of the polyvalent carboxylic acid ester to the polyvinyl alcohol is no more than 6. These dispersions each exhibited, as shown in Tables 2A and 2B, a favorable dispersibility and inhibited separation even when the dispersion was stored for a long period of time, and also exhibited, as shown in Tables 3A and 3B, satisfying resin properties of, for example, water resistance, oil resistance and flexibility, and these resin properties did not deteriorate even when the dispersion was stored for a long period of time. The PVA-8 of the comparative example 1 had a small average molecular weight, and the PVA-9 of the comparative example 2 had a large saponification degree. The mass ratio of the polyvalent carboxylic acid ester to the polyvinyl alcohol in the comparative example 6 exceeded 6. These dispersions were poor in dispersibility and long-term storability.

Working examples 1 to 7 had different average molecular weights and saponification degrees of polyvinyl alcohol. Favorable characteristics were confirmed in PVA-1 to PVA-4, particularly in PVA-2 and PVA-3, in comparison with the PVA-5 and PVA-7 in terms of the average molecular weight, and in comparison with the PVA-6 in terms of the saponification degree.

Working examples 8 to 10, 14 to 16 and 20 to 22 have different types of polyvalent carboxylic acid ester but these examples all exhibited similar effects in terms of, for example, long-term storability. Meanwhile, comparative examples 3 to 5 employ plasticizers which are not polyvalent carboxylic acid esters, but no similar effects were obtained.

[Heat sealability]

The biodegradable resin aqueous dispersion prepared in each of the working examples was applied, using a bar coater, to a 25 mm × 150 mm portion of a craft paper (basis weight of 70 g/m$^2$) that was cut into a strip of 25 mm × 200 mm to have 5 g/m$^2$, and then dried at 25°C and 40% relative humidity followed by sandwiching two test strips between ferrotype plates so that the two test strips were in contact with each other, and then thermally pressing them for one second at 180°C and 300 g/cm$^2$ using an automatic transfer press HP-84 manufactured by HASHIMA CO., LTD to obtain the test strips.

The respective heat seal strengths (N/15mm) of the resultant test strips were evaluated based on JIS K 6854-3 using a tensile testing machine "Strograph E3" manufactured by Toyo Seiki Seisaku-sho, Ltd, and the results indicated that the biodegradable resin aqueous dispersions of the working examples all had favorable heat sealability. Accordingly, the biodegradable resin aqueous dispersion of the present invention is useful as a heat-sealing agent for packaging materials.

**Claims**

1. A biodegradable resin aqueous dispersion in which a biodegradable resin is dispersed in an aqueous solvent, comprising:

   a polylactide resin as being the biodegradable resin;
   a polyvinyl alcohol that has an average molecular weight of 20,000 or more as based on viscosity-average degree of polymerization and has a degree of saponification of no more than 98%; and
   a polyvalent carboxylic acid ester,
   wherein a mass ratio of the polyvalent carboxylic acid ester to the polyvinyl alcohol is no more than 6.

2. The biodegradable resin aqueous dispersion according to claim 1, wherein the polylactide resin dispersed in the aqueous solvent is in a form of resin particle having an average particle diameter of 3.5μm or less.

3. The biodegradable resin aqueous dispersion according to claim 1 or 2, wherein the polyvinyl alcohol has an average molecular weight of 30,000 to 200,000 and a saponification degree of 70% to 94%.

4. A method of using a biodegradable resin aqueous dispersion, comprising the steps of:

   preparing the biodegradable resin aqueous dispersion according to any one of claims 1 to 3;
   storing the biodegradable resin aqueous dispersion for a period within six months; and
   providing the biodegradable resin aqueous dispersion for subsequent use after the storing step.

| INTERNATIONAL SEARCH REPORT | International application No. |
|---|---|
| | **PCT/JP2022/036893** |

**A. CLASSIFICATION OF SUBJECT MATTER**

*C08L 67/04*(2006.01)i; *C08K 5/11*(2006.01)i; *C08K 5/12*(2006.01)i; *C08L 29/04*(2006.01)i; *C08L 101/16*(2006.01)i
FI: C08L67/04 ZBP; C08K5/11; C08K5/12; C08L29/04 D; C08L101/16

According to International Patent Classification (IPC) or to both national classification and IPC

**B. FIELDS SEARCHED**

Minimum documentation searched (classification system followed by classification symbols)

C08L67/04; C08K5/11; C08K5/12; C08L29/04; C08L101/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-285144 A (JAPAN VAM & POVAL CO., LTD.) 14 October 2004 (2004-10-14) claims, paragraph [0024], examples | 1-4 |
| X | JP 2002-121288 A (MIYOSHI YUSHI K.K.) 23 April 2002 (2002-04-23) claims, paragraph [0015], examples | 1-4 |
| X | JP 2004-107413 A (MITSUI CHEMICALS INC.) 08 April 2004 (2004-04-08) claims, paragraph [0021], examples | 1–4 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/036893**

| Patent document<br>cited in search report | | | Publication date<br>(day/month/year) | Patent family member(s) | Publication date<br>(day/month/year) |
|---|---|---|---|---|---|
| JP | 2004-285144 | A | 14 October 2004 | (Family: none) | |
| JP | 2002-121288 | A | 23 April 2002 | (Family: none) | |
| JP | 2004-107413 | A | 08 April 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004107413 A
- JP 2004204038 A
- JP 2001064440 A
- JP 2004099883 A
- JP 2005089751 A
- JP 2002121288 A
- JP 2001247392 A
- JP 2006241400 A